# EUROPÄISCHE PATENTSCHRIFT

(11) **EP 0 992 390 B1**
(45) Veröffentlichungstag und Bekanntmachung des Hinweises auf die Patenterteilung: **22.02.2006**
(21) Anmeldenummer: 99810768.4
(22) Anmeldetag: 26.08.1999
(51) Int. Cl.: B60L 9/28, H05K 5/00, H05K 5/02

(54) **Modular aufgebaute Schaltungsanordnung, insbesondere für den Antrieb eines Schienenfahrzeugs**
Modular circuit, especially for driving a railway vehicle
Circuit modulaire, notamment pour l'entraînement d'une véhicule ferroviaire

(30) Priorität: 09.09.1998 DE 19841132
(43) Veröffentlichungstag der Anmeldung: 12.04.2000
(73) Patentinhaber: Bombardier Transportation GmbH, 13627 Berlin (DE)
(72) Erfinder: Berth, Matthias, Dr., 5400 Baden (CH); Schifferli, Rolf, 5276 Wil (CH)
(74) Vertreter: Thielmann, Andreas

(56) Entgegenhaltungen:
- EP-A- 0 820 893
- DE-A- 3 932 000
- DE-A- 19 501 660
- US-A- 4 514 708
- US-A- 4 914 550

## Beschreibung

### TECHNISCHES GEBIET

Bei der Erfindung wird ausgegangen von einer modular aufgebauten Schaltungsanordnung, insbesondere für einen Antrieb eines Schienenfahrzeugs, nach dem Oberbegriff von Patentanspruch 1.

### STAND DER TECHNIK

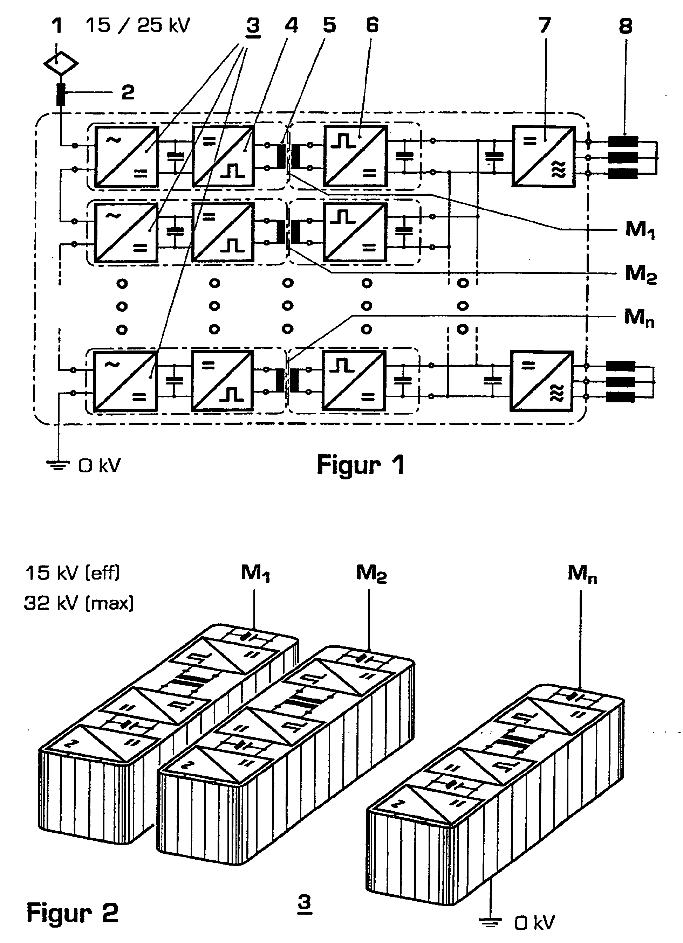

Eine Schaltungsanordnung der eingangs genannten Art ist insbesondere in Fig.6 von DE 196 30 284 A1 beschrieben. Diese Schaltungsanordnung umfasst n miteinander in Serie geschaltete Teilstromrichtermodule 40.1,.....,40.n mit zueinander parallel geschalteten Ausgängen. Die Ausgänge sind verbindbar mit Teilrichtermodulen 41.1, ...41.m mit jeweils einem Antriebsmotor 42.1,...,42.m. In den Teilstromrichtermodulen 40.1, ...40.n wird die relativ hohe Wechselspannung zwischen Fahrdraht 36 und Schiene 37 eines Antriebs für ein Schienenfahrzeug entsprechend der Anzahl n der Stromrichtermodule aufgeteilt. An den Ausgängen der Teilstromrichtermodule 40.1,....40.n steht eine entsprechend der Anzahl der Module n reduzierte, von der Eingangsspannung jeweils durch einen Transformator 6 (Fig.1) galvanisch getrennte geringe Ausgangsspannung an, welche über die Teilstromrichtermodule 43.1,...,43.m in die Antriebsmotore 42.1,...42.m einspeist. Umgekehrt können auch die Antriebsmotoren beim Abbremsen des Schienenfahrzeugs über die Teilstromrichtermodule ins Netz einspeisen. Da alle Teilstromrichtermodule lediglich mit einer geringen Spannung beaufschlagt sind, können sie in kostengünstiger Weise mit Halbleiterschaltem 11 (Fig.1) üblicher Spannungsfestigkeit betrieben werden.

Aus der DE 195 01 660 A1 und der DE 39 32 000 A1 ist es bekannt, mehrere Module mit elektronischen Bauelementen zu einer Anordnung zusammenzufügen. Der elektrische Kontakt zwischen benachbarten Modulen wird dabei über Kontaktelemente einer Kontaktanordnung hergestellt, die an einander zugewandten Seitenflächen der Module angeordnet sind. Die Kontaktelemente sind dabei jeweils so ausgebildet, dass die elektrische Verbindung durch eine Fügebewegung erfolgt, die senkrecht zu den einander zugewandten Seitenflächen gerichtet ist. Hierdurch wird zwar eine kompakte Anordnung erzielt, die Austauschbarkeit der Module ist jedoch nur mit erhöhtem Aufwand möglich. So müssen zum Lösen eines Moduls, das zu beiden Seiten benachbarte Module aufweist, zumindest die auf einer Seite des auszutauschenden Moduls liegenden Nachbarmodule bewegt werden, um die Verbindungen des auszutauschenden Moduls zu lösen.

Eine ähnliche Verbindungskonfiguration ist aus der US 4,514,708 bekannt, bei der ein Steckkontakt zwischen zwei elektrischen Bauteilen ebenfalls durch eine Fügebewegung erfolgt, die senkrecht zu den einander zugewandten Seiten- bzw. Kontaktflächen gerichtet ist.

### KURZE DARSTELLUNG DER ERFINDUNG

Der Erfindung, wie sie in den Patentansprüchen angegeben ist, liegt die Aufgabe zugrunde, die Schaltungsanordnung der eingangs genannten Art möglichst platzsparend mit einfach anstauschbaren Modulen auszubilden.

Bei der Schaltungsanordnung nach der Erfindung weisen die Module jeweils ein vorwiegend quaderförmig ausgebildetes Isolierstoffgehäuse auf, sind die einzelnen Gehäuse dicht benachbart auf einer Tragplatte angeordnet und sind die leistungselektronischen Baugruppen über Kontaktanordnungen miteinander verbunden, welche durch benachbarte Seitenwände der Gehäuse geführt sind und durch Verschiebung parallel zu den Seitenwänden betätigbar sind. Die Schaltungsanordnung kann so äusserst platzsparend und in dielektrisch sicherer Weise in einem flachen Raum untergebracht werden, der bei einem Schienenfahrzeug mit Vorteil unterflur gelegen sein kann. Da die einzelnen Isolierstoffgehäuse eng benachbart angeordnet sind, da deren Front-, Deck- und Bodenflächen jeweils eine auf Erd- oder Massepotential geführte elektrisch leitende Schicht aufweist, und da die elektrischen Verbindungen der einzelnen Module durch eng benachbarten Seitenwände geführt sind, befindet sich die gesamte Schaltungsanordnung berührungssicher in einem dielektrisch gut abgedichteten Gehäuse. Durch die gleichartige Ausbildung der Isolierstoffgehäuse der einzelnen Module kann zum einen besonders kostengünstig gefertigt werden und können zum anderen die Module bei Bedarf untereinander ausgetauscht oder durch ein Ersatzmodul ausgewechselt werden.

### KURZE BESCHREIBUNG DER ZEICHNUNG

Ein bevorzugtes Ausführungsbeispiel der Erfindung und die damit erzielbaren weiteren Vorteile werden nachfolgend anhand von Zeichnungen näher erläutert. Hierbei zeigt:
- Fig.1: ein Blockschaltbild des Antriebs eines Schienenfahrzeugs mit einer modular aufgebauten Schaltungsanordnung nach der Erfindung,
- Fig.2: eine perspektivische Ansicht der stark vereinfacht dargestellten Schaltungsanordnung gemäss Fig.1,
- Fig.3: eine Aufsicht auf zwei benachbarte Module M₁, M₂ der Schaltungsanordnung nach den Figuren 1 und 2, von denen das Modul M₂ längs einer aus Fig.4 ersichtlichen Linie III - III geschnitten ist, und
- Fig.4: eine Seitenansicht des längs der Linie IV - IV geschnittenen Moduls M₂ nach Fig.3, bei der ein nicht geschnittener Teil des Moduls geringfügig vergrössert dargestellt ist.

### WEGE ZUR AUSFÜHRUNG DER ERFINDUNG

In allen Figuren beziehen sich gleiche Bezugszeichen auf gleichwirkende Teile. Der als Blockschaltbild dargestellte Antrieb für ein Schienenfahrzeug enthält einen an eine Hochspannungsleitung von beispielsweise 15 bzw. 25 kV Wechselspannung führbaren Stromabnehmer 1, der über eine Eingangsdrosselspule 2 mit einem auf Hochspannungspotential befindlichen ersten Eingang einer Schaltungsanordnung 3 verbunden ist. Ein zweiter Eingang der Schaltungsanordnung 3 ist mit Erdpotential oder Masse verbunden. Die Schaltungsanordnung 3 ist aus n (n= 2,3,...) in Reihe geschalteten, jeweils eine galvanische Trennstelle aufweisenden, leistungselektronischen Modulen M₁, M₂,...Mₙ aufgebaut, von denen das Modul M₁ an Hochspannungspotential und das Modul Mₙ an Masse oder Erdpotential geführt ist. Die Module sind identisch aufgebaut und weisen jeweils eine von einem Isolierstoffgehäuse umschlossene, als Stromrichtersystem ausgebildete Leistungselektronik auf sowie zwei Eingänge, von denen ein erster mit dem in der Reihenschaltung vorgeschalteten und ein zweiter mit dem in der Reihenschaltung nachgeschalteten Modul verbunden ist. Abweichend davon ist beim Modul M₁ der erste Eingang auf Hochspannungspotential und beim Modul Mₙ der zweite Eingang auf Erdpotential oder Masse geführt. Jedes Modul weist eine mit den beiden Eingängen verbundene leistungselektronischen Baugruppe 4 auf, einen eine galvanische Trennstelle bildenden Transformator 5 und eine dem Transformator 5 nachgeschaltete leistungselektronischen Baugruppe 6 mit zwei aus dem Modul geführten Ausgängen. Die Ausgänge liegen parallel und sind über m (m=1, 2,...) Stromrichtersysteme 7 mit m Antriebsmotoren 8 verbunden.

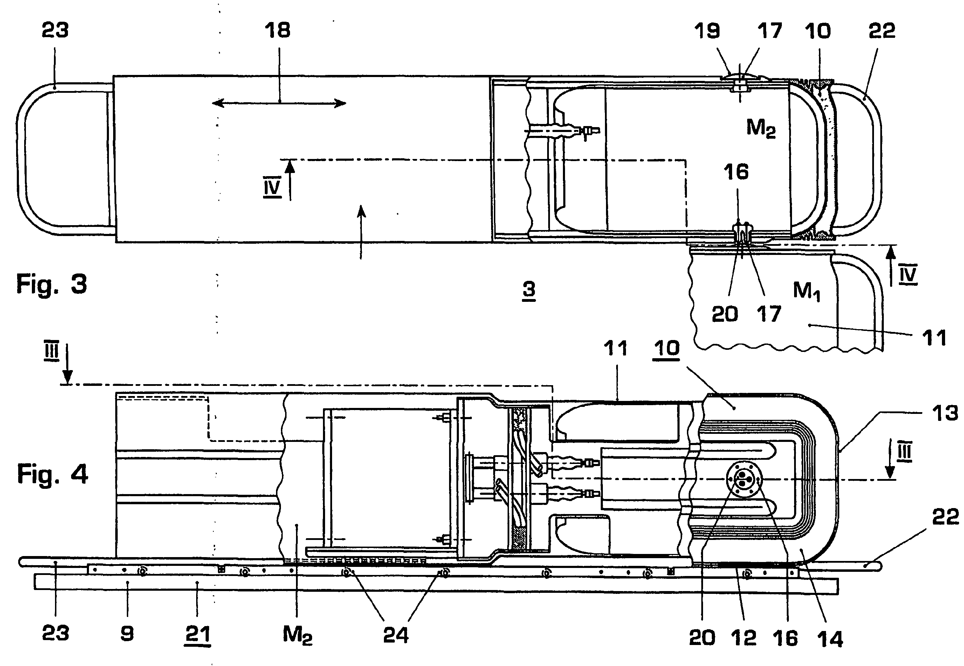

Wie aus den Fig.2 bis 4 ersichtlich ist, sind die Module im wesentlichen quaderförmig ausgebildet und sind zueinander parallel und im Vergleich zu ihrer Höhe mit geringem Abstand voneinander auf einer auf Masse oder Erdpotential befindlichen Platte 9 (Fig.4) angeordnet. Aus den Figuren 3 und 4 ist zu entnehmen, dass die Module jeweils ein vorwiegend quaderförmig ausgebildetes Isolierstoffgehäuse 10 aufweisen. Auf ihrer Deck- 11 und Bodenfläche 12 sowie ihrer nach vorne abgeschlossenen Frontseite 13 enthalten die Isolierstoffgehäuse 10 jeweils eine auf Masse oder Erdpotential geführte elektrisch leitende Schicht. Durch die einander zugewandten Seitenflächen 14, 15 jeweils zweier benachbarter Module ist jeweils ein Stromanschluss für einen Kontakt 16, 17 einer die Serienschaltung dieser beiden Module herstellenden Kontaktanordnung geführt.

Die Modul M₁, M₂,.... sind jeweils senkrecht zur Frontseite 13 des Isolierstoffgehäuses 10 auf der Platte 9 verschiebbar gelagert. Die Kontaktanordnung ist durch gegenseitiges Verschieben zweier benachbarter Module betätigbar. Einer der beiden Kontakte 16, 17 der Kontaktanordnung, nämlich der Kontakt 17, weist eine schräg zur Schubrichtung (Doppelpfeil 18 in Fig.3) ausgerichtete Führungsfläche 19 auf, die beim Verschieben mit dem Gegenkontakt 16 zusammenwirkt und je nach Schubrichtung des Moduls in oder ausser Eingriff mit federnd gelagerten Stiften 20 des Gegenkontakts 16 kommt.

Aus Fig.4 ist ersichtlich, dass an der Bodenfläche des Moduls M₂ ein schlittenförmiges, im wesentlichen rechteckiges Führungselement 21 mit Handgriffen 22, 23 angebracht ist. Dieses Führungselement weist an seinen als Kufen wirkenden Längsseiten Rollen 24 auf, welche auf zwei nicht dargestellten, in die Platte 9 eingeformten Schienen geführt sind. An der Frontal- 13 und/oder der Rückseite des isolierstoffgehäuses 10 überragen die Handgriffe das Isolierstoffgehäuse 10. Das Modul ist so in besonders vorteilhafter Weise handhabbar.

Bei der Montage dieser Schaltungsanordnung werden die einzelnen Module M₁, M₂,....Mₙ der Reihe nach auf die Platte 9 aufgeschoben. Die Platte 9 stellt die Bodenfläche eines flachen Raums dar, welcher bei einem Schienenfahrzeug unterflur angeordnet sein kann. Beim Aufschieben werden die Kontakte 16, 17 unter Bildung der Reihenschaltung galvanisch miteinander verbunden. Da die einzelnen Module nur einen geringen Abstand voneinander aufweisen, schirmen die beschichteten Flächen 11, 12 und 13 der Isolierstoffgehäuse 10 benachbarter Module die Kontakte 16, 17 wirkungsvoll nach aussen ab, so dass die Schaltungsanordnung als kompakter, dielektrisch abgeschimter Block berührungssicher in dem flachen Raum untergebracht ist.

### Bezugszeichenliste

- 1: Stromabnehmer
- 2: Eingangsdrosselspule
- 3: Schaltungsanordnung
- 4: leistungselektronische Baugruppen
- 5: Transformatoren
- 6: leistungselektronische Baugruppen
- 7: Stromrichtersysteme
- 8: Antriebsmotore
- 9: Platte
- 10: Isolierstoffgehäuse
- 11: Deckfläche
- 12: Bodenfläche
- 13: Frontseite
- 14, 15: Seitenflächen
- 16, 17: Kontakte
- 18: Doppelpfeil
- 19: Führungsfläche
- 20: Stifte
- 21: Führungselement
- 22, 23: Handgriffe
- 24: Rollen

## Patentansprüche

1. Modular aufgebaute Schaltungsanordnung (3), insbesondere für einen Antrieb eines Schienenfahrzeug, mit mindestens zwei in Serie geschalteten leistungselektronischen, jeweils eine galvanische Trennstelle aufweisenden Modulen (M₁, M₂....Mₙ), von denen ein erstes (M₁) an Hochspannungspotential und ein zweites (Mₙ) an Masse oder Erdpotential geführt ist, wobei das erste Modul (M₁) eine auf Hochspannungspotential befindliche erste leistungselektronische Baugruppe (4) aufweist, welche mit einer auf niedrigerem Potential befindlichen leistungselektronischen Baugruppe (4) des zweiten oder eines dritten Moduls (M₂) verbunden ist, **dadurch gekennzeichnet, dass** die leistungsetektronischen Baugruppen (4) der mindestens zwei Module (M₁, Mₙ) und des gegebenenfalls vorgesehenen dritten Moduls (M₂) jeweils in einem weitgehend quaderförmig ausgebildeten Isolierstoffgehäuse (10) angeordnet sind, dass die Isolierstoffgehäuse (10) gleichartig ausgebildet und parallel und im Vergleich zu ihrer Höhe mit geringem Abstand zueinander auf einer auf Masse oder Erdpotential befindlichen Platte (9) angeordnet sind und auf ihrer Deck- (11) und Bodenfläche (12) sowie ihrer nach vorne abgeschlossenen Frontseite (13) jeweils eine auf Masse oder Erdpotential geführte elektrisch leitende Schicht aufweisen, und dass durch die einander zugewandten Seitenflächen (14, 15) der Isolierstoffgehäuse (10) jeweils zweier der Module (M₁, M₂) jeweils ein Stromanschluss für einen Kontakt (16, 17) einer die Serienschaltung dieser beiden Module (M₁, M₂) herstellenden Kontaktanordnung geführt ist, wobei die Kontaktanordnung durch gegenseitiges Verschieben der büden Module (M₁, M₂) ein Wesentlichen parallel zu den einander zugewandten Seitenflächen (14, 15) betätigbar ist.

2. Schaltungsanordnung nach Anspruch 1, **dadurch gekennzeichnet, dass** die Module (M₁, M₂,...Mₙ) jeweils senkrecht zur Frontseite (13) des Isolierstoffgehäuses (10) auf der Platte (9) verschiebbar gelagert sind.

3. Schaltungsanordnung nach Anspruch 2, **dadurch gekennzeichnet, dass** Kontaktanordnung durch gegenseitiges Verschieben zweier benachbarter Module (M₁, M₂) betätigbar ist.

4. Schaltungsanordnung nach Anspruch 3, **dadurch gekennzeichnet, dass** einer (17) der beiden Kontakte (16, 17) der Kontaktanordnung eine schräg zur Schubrichtung (18) ausgerichtete Führungsfläche (19) für den Gegenkontakt (16) aufweist.

5. Schaltungsanordnung nach einem der Ansprüche 1 bis 4, **dadurch gekennzeichnet, dass** die Bodenfläche (12) mindestens eines der Module (M₂) ein auf der Platte (9) verschiebbares Führungselement (21) aufweist.

6. Schaltungsanordnung nach Anspruch 5, **dadurch gekennzeichnet, dass** das Führungselement (21) nach Art eines Schlittens ausgebildet ist

7. Schaltungsanordnung nach Anspruch 6, **dadurch gekennzeichnet, dass** der Schlitten mindestens einen die Front- (11) und/oder die Rückseite des lsolierstoffgehäuses (10) überragenden Handgriff (22, 23) aufweist.

8. Schaltungsanordnung nach Anspruch 7, **dadurch gekennzeichnet, dass** an den Kufen des Schlittens auf Führungsschienen der Platte (9) abgestützte Rollen (24) gelagert sind.

## Claims

1. Circuit arrangement (3) of modular design, in particular for a propulsion of a railroad vehicle, having at least two series-connected, power-electronics modules (M₁, M₂, ...Mₙ), which each have a galvanic separation point and of which a first (M₁) is connected to high voltage potential and a second (Mₙ) is connected to mass or ground potential, wherein the first module (M₁) has a first power-electronics assembly (4) which is at high voltage potential and is connected to a power-electronics assembly (4) being at a lower potential and being part of the second or of a third module (M₂), **characterized in that** the power-electronics assemblies (4) of the at least two modules (M₁, Mₙ) and of the eventually provided third module (M₂) are each arranged in an insulating material housing (10) of substantially cuboid design, **in that** the insulating material housings (10) are of identical design and are arranged parallel to one another and, with regard to their height, a short distance apart from one another on a plate (9) which is at mass or ground potential, and each have an electrically conductive layer being at mass or ground potential on their top surface (11) and bottom surface (12) as well as on their front face (13) closed towards the front, and wherein an electrical connection for a contact (16, 17) of a contact arrangement producing the series circuit of two respective modules (M₁, M₂) is respectively passed through the mutually facing side surfaces (14, 15) of the insulating material housing (10) of two of the modules (M₁, M₂), wherein the contact arrangement is actuatable by mutually shifting the two modules (M₁, M₂) substantially parallel to their mutually facing side surfaces (14, 15).

2. Circuit arrangement according to claim 1, **characterized in that** the modules (M₁, M₂, ...Mₙ) are respectively supported on the plate (9) to be movable perpendicularly with respect to the front face (13) of the insulating material housing (10).

3. Circuit arrangement according to claim 2, **characterized in that** the contact arrangement is actuatable by moving two adjacent modules (M₁, M₂) with respect to one another.

4. Circuit arrangement according to claim 3, **characterized in that** one (17) of the two contacts (16, 17) of the contact arrangement has a guide surface (19) for the mating contact (16), the guide surface (19) being arranged at an angle with respect to the pushing direction (18).

5. Circuit arrangement according to one of claims 1 to 4, **characterized in that** the bottom surface (12) of at least one of the modules (M₂) has a guide element (21) which can be moved on the plate (9).

6. Circuit arrangement according to claim 5, **characterized in that** the guide element (21) is designed like a slide.

7. Circuit arrangement according to claim 6, **characterized in that** the slide has at least one handle (22, 23) which protrudes from the front face (11) and/or the rear face of the insulating material housing (10).

8. Circuit arrangement according to claim 7, **characterized in that** rollers (24) mounted on the runners of the slide are supported on guide rails on the plate (9).

## Revendications

1. Système de circuit à structure modulaire (3), notamment pour une propulsion de véhicule ferroviaire, comprenant au moins deux modules (M₁, M₂, ... Mₙ) électroniques de puissance montés en série et présentant chacun un point de séparation galvanique, dont le premier (M₁) est branché au potentiel de haute tension et le deuxième (Mₙ) est branché à la masse ou au potentiel de terre, le premier module (M₁) présentant un premier agrégat électronique de puissance (4) se trouvant au potentiel de haute tension et relié à un agrégat électronique de puissance (4) se trouvant à un plus bas potentiel et faisant partie du deuxième ou d'un troisième module (M₂), **caractérisé en ce que** les agrégats électroniques de puissance (4) des au moins deux modules (M₁, Mₙ) et du troisième module (M₂) éventuellement prévu sont disposés respectivement dans un boîtier en matériau isolant (10) réalisé dans une large mesure avec une forme quadratique, que les boîtiers en matériau isolant (10) sont réalisés de la même manière et disposés parallèlement et, comparativement à leur hauteur, à une faible distance les uns des autres sur une plaque (9) se trouvant à la masse ou au potentiel de terre, et présentent respectivement, sur leur surface de dessus (11) et de fond (12) ainsi que sur leur face frontale (13) fermée vers l'avant une couche conductrice d'électricité branchée à la masse ou au potentiel de terre, et que, par les deux surfaces latérales (14, 15) tournées l'une vers l'autre du boîtier isolant (10) de respectivement deux des modules (M₁, M₂), est guidé respectivement un raccordement électrique pour un contact (16, 17) d'un système de contact créant le circuit en série de ces deux modules (M₁, M₂), le système de contact étant actionnable par décalage réciproque des deux modules (M₁, M₂) sensiblement parallèlement aux surfaces latérales (14, 15) tournées l'une vers l'autre.

2. Système de circuit selon la revendication 1, **caractérisé en ce que** les modules (M₁, M₂, ... Mₙ) s'appuient à chaque fois de manière mobile perpendiculairement à la face frontale (13) du boîtier en matériau isolant (10) sur la plaque (9).

3. Système de circuit selon la revendication 2, **caractérisé en ce que** le système de contact est actionnable par décalage réciproque de deux modules voisins (M₁, M₂).

4. Système de circuit selon la revendication 3, **caractérisé en ce qu'**un (17) des deux contacts (16, 17) du système de contact présente une surface de guidage (19) pour le contre-contact (16), laquelle surface de guidage est orientée à l'oblique par rapport au sens de poussée (18).

5. Système de circuit selon une des revendications 1 à 4, **caractérisé en ce que** la surface de fond (12) d'au moins un des modules (M₂) présente un élément de guidage (21) déplaçable sur la plaque (9).

6. Système de circuit selon la revendication 5, **caractérisé en ce que** l'élément de guidage (21) est réalisé à la manière d'un chariot.

7. Système de circuit selon la revendication 6, **caractérisé en ce que** le chariot présente au moins une poignée (22, 23) dépassant de la face frontale et/ou postérieure du boîtier en matériau isolant (10).

8. Système de circuit selon la revendication 7, **caractérisé en ce que**, sur les patins du chariot, sont soutenus des rouleaux (24) qui s'appuient par des rails de guidage de la plaque (9).
